# EUROPEAN PATENT APPLICATION

(11) **EP 3 425 482 A2**
(43) Date of publication of application: **09.01.2019**
(21) Application number: 18179097.3
(22) Date of filing: 21.06.2018
(51) Int. Cl.: G06F 3/01

(54) **ACTIVE MATRIX HAPTIC FEEDBACK**

(30) Priority: 07.07.2017 US 201715643654
(71) Applicant: Immersion Corporation, San Jose, CA 95134 (US)
(72) Inventor: KHOSHKAVA, Vahid, Montreal, Québec H2X 3R4 (CA)
(74) Representative: Hofstetter, Schurack & Partner

(57) **Abstract**

A method and system of generating haptic effects using an active matrix are presented. The method includes detecting a user input on a device and then, in response to that user input, determining a location in an active matrix comprising a plurality of actuation areas where a haptic effect is to be produced. The method then activates an actuation area within the active matrix at the determined location and produces a haptic effect at the determined location. The system includes a device with a sensor configured to detect an input, an active matrix, and a haptic generator. The active matrix is coupled to a surface of the device and includes multiple actuation areas. The haptic generator generates a haptic signal in response to the input and sends the haptic signal to at least one of the actuation areas to produce a haptic effect.

## Description

### FIELD

One embodiment is directed generally to a haptic system, and in particular, to an active matrix haptics generation system.

### BACKGROUND INFORMATION

Haptics is a tactile and force feedback technology that takes advantage of the sense of touch of a user by applying haptic feedback effects (e.g., "haptic effects"), such as forces, vibrations, and motions, to the user. Devices, such as mobile devices, touchscreen devices, and personal computers, can be configured to generate haptic effects. In general, calls to embedded hardware capable of generating haptic effects (such as actuators) can be programmed within an operating system ("OS") of the device. These calls specify which haptic effect to play. For example, when a user interacts with the device using, for example, a button, touchscreen, lever, joystick, wheel, or some other control, the OS of the device can send a play command through control circuitry to the embedded hardware. The embedded hardware then produces the appropriate haptic effect.

### SUMMARY

In an embodiment of the present disclosure, a system and method of generating haptic effects using an active matrix are presented. The method includes detecting a user input on a device and then, in response to that user input, determining a location in an active matrix comprising a plurality of actuation areas where a haptic effect is to be produced. The method then activates an actuation area within the active matrix at the determined location and produces a haptic effect at the determined location. The system includes a device with a sensor configured to detect an input, an active matrix, and a haptic generator. The active matrix is coupled to a surface of the device and includes multiple actuation areas. The haptic generator generates a haptic signal in response to the input and sends the haptic signal to at least one of the actuation areas to produce a haptic effect.

### BRIEF DESCRIPTION OF THE DRAWINGS

The accompanying drawings, which are incorporated herein and form part of the specification, illustrate the present invention and, together with the description, further serve to explain the principles of the present invention and to enable a person skilled in the relevant art(s) to make and use the present invention.

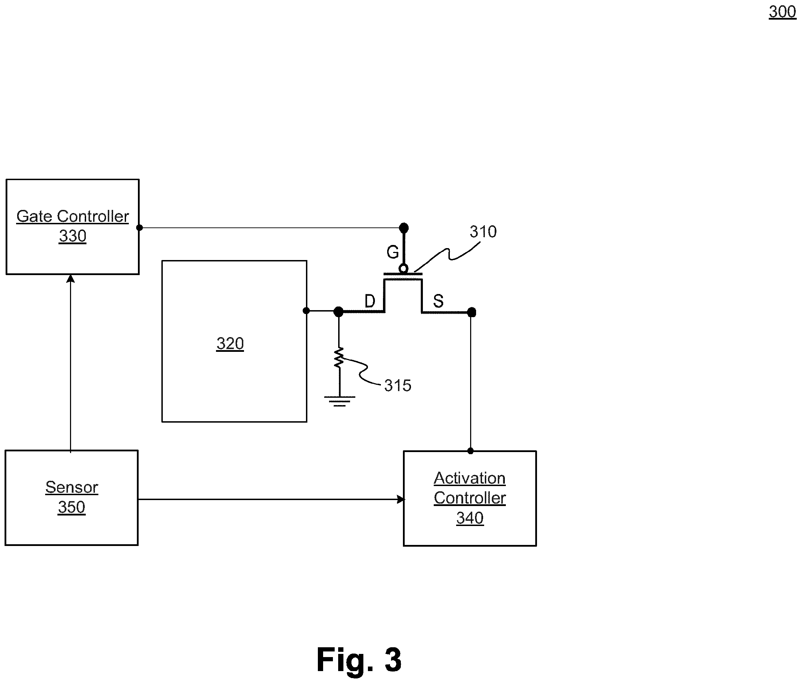

Additionally, the left most digit of a reference number identifies the drawing in which the reference number first appears (e.g., a reference number '310' indicates that the element so numbered is first labeled or first appears in FIG. 3). Additionally, elements which have the same reference number, followed by a different letter of the alphabet or other distinctive marking (e.g., an apostrophe), indicate elements which are the same in structure, operation, or form but may be identified as being in different locations in space or recurring at different points in time.
Fig. 1 illustrates a block diagram of a computer/server system, according to an embodiment of the present disclosure.
Fig. 2 is a diagram of a passive haptic array, according to an embodiment.
Fig. 3 is a diagram of a portion of an active matrix controlling an actuation area, according to an embodiment of the present disclosure.
Fig. 4 is a diagram of a possible active matrix using switching transistors, according to an embodiment of the present disclosure.
Fig. 5 is an illustration of a sensor matrix system, according to an embodiment of the present disclosure.
Fig. 6 is an illustration of a haptic active matrix system with actuation pads combined with a sensor matrix system with sensors, according to an embodiment of the present disclosure.
Fig. 7 is a flow diagram of the functionality of the system of Fig. 1 utilizing an active matrix to generate localized haptic feedback, according to an embodiment of the present disclosure.

### DETAILED DESCRIPTION

One embodiment provides a haptic effect generation system that produces haptic effects based on one or more user touches to a touch sensitive device using sensors to detect a user's touch input and an active matrix to control localized haptic feedback. The active matrix can activate only those actuation areas that involve the user's touch or additional neighboring actuation areas can be activated to boost the haptic effects. In that manner, an active matrix powers only those haptic actuation areas that interact with the user, or those additional areas needed to boost the haptic effects.

While embodiments described herein are illustrative embodiments for particular applications, it should be understood that the invention is not limited thereto. Those skilled in the art with access to the disclosure provided herein will recognize additional modifications, applications, and embodiments within the scope thereof and additional fields in which the invention would be of significant utility.

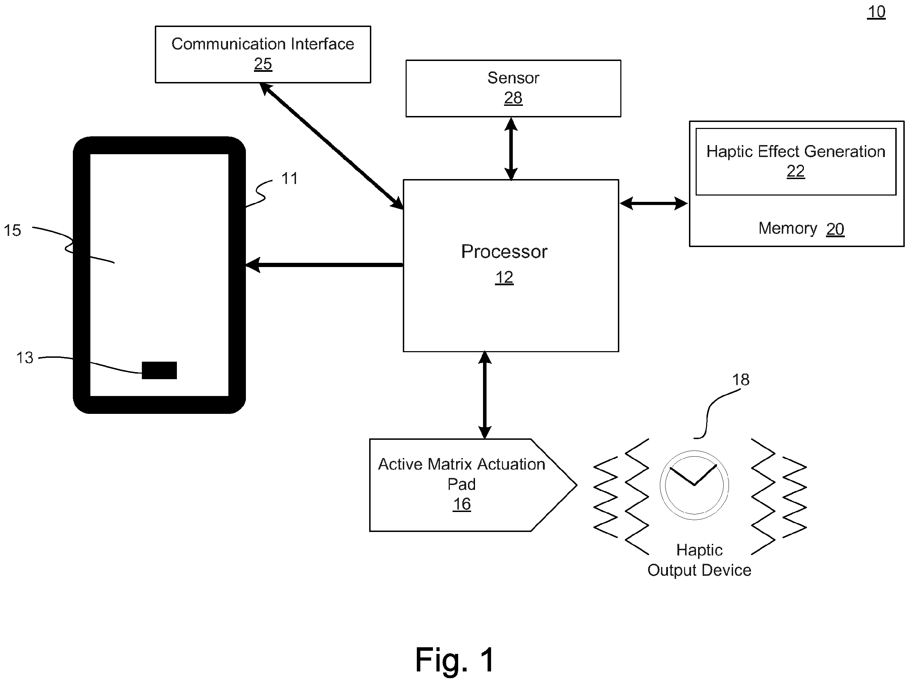

Fig. 1 is a block diagram of a haptically enabled system 10 that can implement an embodiment of the present invention. System 10 includes a smart device 11 (e.g., smart phone, tablet, smart watch, etc.) with mechanical or electrical selection buttons 13, and a touch sensitive screen 15. System 10 can also be any device held by the user, such as a gamepad, motion wand, etc.

Internal to system 10 is a haptic feedback system that generates haptic effects on system 10. The haptic feedback system includes a processor or controller 12. Coupled to processor 12 are a memory 20 and an active matrix actuation pad 16, which is coupled to a haptic output device 18. Processor 12 may be any type of general-purpose processor, or could be a processor specifically designed to provide haptic effects, such as an application-specific integrated circuit ("ASIC"). Processor 12 may be the same processor that operates the entire system 10, or may be a separate processor. Processor 12 can decide what haptic effects are to be played and the order in which the effects are played based on high-level parameters. In general, the high-level parameters that define a particular haptic effect include magnitude, frequency and duration. Low-level parameters such as streaming motor commands could also be used to determine a particular haptic effect. A haptic effect may be considered "dynamic" if it includes some variation of these parameters when the haptic effect is generated or a variation of these parameters based on a user's interaction.

Processor 12 outputs the control signals to drive active matrix actuation pad 16, which includes electronic components and circuitry used to supply haptic output device 18 with the required electrical current and voltage (i.e., "motor signals") to cause the desired haptic effects to be generated. System 10 may include multiple haptic output devices 18, and each haptic output device 18 may include an active matrix actuation pad 16, all coupled to a common processor 12. Memory 20 can be any type of transitory or non-transitory storage device or computer-readable medium, such as random access memory ("RAM") or read-only memory ("ROM"). Communication media may include computer readable instructions, data structures, program modules, or other data in a modulated data signal such as a carrier wave or other transport mechanism, and includes any information delivery media.

Memory 20 stores instructions executed by processor 12, such as operating system instructions. Among the instructions, memory 20 includes a haptic effect permissions module 22 which is instructions that, when executed by processor 12, generate haptic effects based on permissions, as disclosed in more detail below. Memory 20 may also be located internal to processor 12, or any combination of internal and external memory.

Haptic output device 18 may be any type of device that generates haptic effects, and can be physically located in any area of system 10 to be able to create the desired haptic effect to the desired area of a user's body. In some embodiments, system 10 includes tens or even hundreds of haptic output devices 18, and the haptic output devices can be of different types to be able to generate haptic effects in generally every area of a user's body, and any type of haptic effect. Haptic output device 18 can be located in any portion of system 10, including any portion of smart device 11, or can be remotely coupled to any portion of system 10.

In one embodiment, haptic output device 18 is an actuator that generates vibrotactile haptic effects. Actuators used for this purpose may include an electromagnetic actuator such as an Eccentric Rotating Mass ("ERM") in which an eccentric mass is moved by a motor, a Linear Resonant Actuator ("LRA") in which a mass attached to a spring is driven back and forth, or a "smart material" such as piezoelectric, electroactive polymers ("EAP")or shape memory alloys. Haptic output device 18 may also be a device such as an electrostatic friction ("ESF") device or an ultrasonic surface friction ("USF") device, or a device that induces acoustic radiation pressure with an ultrasonic haptic transducer. Other devices can use a haptic substrate and a flexible or deformable surface, and devices can provide projected haptic output such as a puff of air using an air jet, etc. Haptic output device 18 can further be a device that provides thermal haptic effects (e.g., heats up or cools off).

System 10 further includes a sensor 28 coupled to processor 12. Sensor 28 can be used to detect any type of properties of the user of system 10 (e.g., a biomarker such as body temperature, heart rate, etc.), or of the context of the user or the current context (e.g., the location of the user, the temperature of the surroundings, etc.).

Sensor 28 can be configured to detect a form of energy, or other physical property, such as, but not limited to, sound, movement, acceleration, physiological signals, distance, flow, force/pressure/strain/bend, humidity, linear position, orientation/inclination, radio frequency, rotary position, rotary velocity, manipulation of a switch, temperature, vibration, or visible light intensity. Sensor 28 can further be configured to convert the detected energy, or other physical property, into an electrical signal, or any signal that represents virtual sensor information. Sensor 28 can be any device, such as, but not limited to, an accelerometer, an electrocardiogram, an electroencephalogram, an electromyograph, an electrooculogram, an electropalatograph, a galvanic skin response sensor, a capacitive sensor, a hall effect sensor, an infrared sensor, an ultrasonic sensor, a pressure sensor, a fiber optic sensor, a flexion sensor (or bend sensor), a force-sensitive resistor, a load cell, a LuSense CPS² 155, a miniature pressure transducer, a piezo sensor, a strain gage, a hygrometer, a linear position touch sensor, a linear potentiometer (or slider), a linear variable differential transformer, a compass, an inclinometer, a magnetic tag (or radio frequency identification tag), a rotary encoder, a rotary potentiometer, a gyroscope, an on-off switch, a temperature sensor (such as a thermometer, thermocouple, resistance temperature detector, thermistor, or temperature-transducing integrated circuit), a microphone, a photometer, an altimeter, a biological monitor, a camera, or a light-dependent resistor.

System 10 further includes a communication interface 25 that allows system 10 to communicate over the Internet/cloud (not shown). The internet/cloud can provide remote storage and processing for system 10 and allow system 10 to communicate with similar or different types of devices. Further, any of the processing functionality described herein can be performed by a processor/controller remote from system 10 and communicated via communication interface 25.

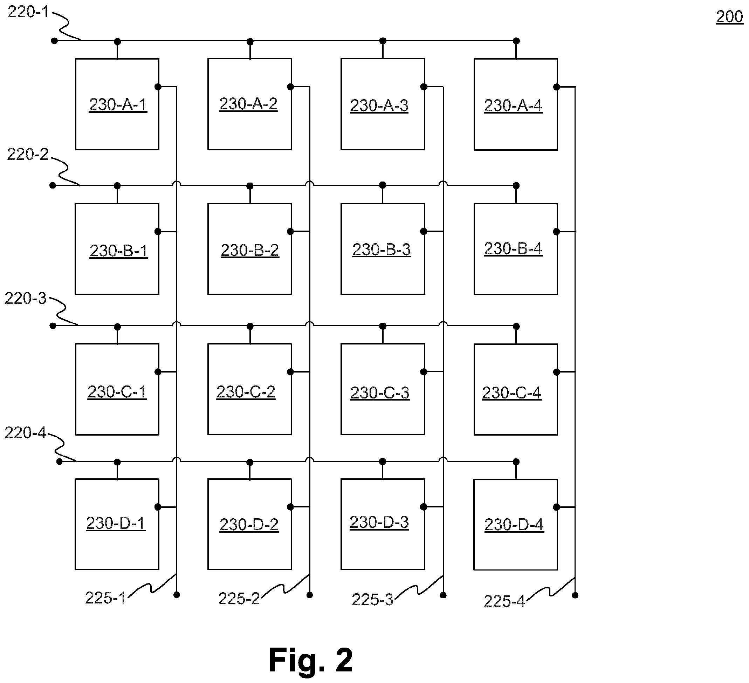

In an embodiment, a haptic system can use a passive array system to produce haptic feedback. Fig. 2 is a diagram of a passive haptic array 200, according to an embodiment. Passive haptic array 200 includes actuation areas 230 includes an M x N array consisting of rows A-D (M=4) and columns 1-4 (N=4). Passive haptic array 200 includes row select lines 220 and column select lines 225. Actuation areas 230 typically include an actuator and in some embodiments, a sensor. In some embodiments, the sensor and the actuator can be the same component, for example, an EAP can be activated to produce a haptic effect. However, an EAP can also be deformed, such as by the touch of a user, to produce an output signal, and hence behave as a sensor.

Selection of a particular actuation area is accomplished by selecting and activating the corresponding row and column. For example, if actuation area 230-B-3 was selected for activation, row select line 220-2 and column select line 225-3 would be activated, where actuation area 230-B-3 is the intersection of row B and column 3. While passive haptic array 200 is relatively simple in design, it is not the most energy efficient approach. In selecting row B and column 3, not only is actuation area 230-B-3 active, but all of row B is active (e.g., 230-B-1, 230-B-2, 230-B-3 and 230_B-4) and all of column 3 is active (e.g., 230-A-3, 230-B-3, 230-C-3 and 230-D-3). Therefore, in this example, to select a single actuation area, eight actuation areas are actually selected, powered and activated. This is true when all the rows or columns share the same ground. If the grounds are not shared then an individual actuator patch could be activated, but there will be energy loss due to the fact that a full line or row would need to be powered on just to enable a small actuator patch.

To address the power efficiency situation described in Fig. 2, the embodiments described in Figs. 3-7 add a transistor, gate controller and activation controller to allow for individual actuation area addressing and activating. Fig. 3 is a diagram of a single cell of a haptic active matrix system 300, according to an embodiment. Haptic active matrix system 300 includes a field-effect transistor ("FET") 310, a resistor 315, an actuation pad 320, a gate controller 330, an activation controller 340 and a sensor 350.

FET 310 is referenced as a field-effect transistor, but as known to one of ordinary skill in the art, FET 310 can be any type of switching transistor, including but not limited to a junction field-effect transistor ("JFET"), a metal-oxide-semiconductor field-effect transistor (MOSFET), a depleted substrate FET ("DEPFET"), quantum FET ("QFET"), and the like. Further, as will be discussed later, thin-film transistors ("TFT") can also effectively be used in a haptic active matrix array, where a semiconductor material (e.g., amorphous silicon, polysilicon, carbon nanotube, indium gallium zinc oxide, metal oxides, etc.) act as a switch.

Actuation pad 320 (or active matrix actuation pad 16 of Fig. 1) is used to produce a haptic effect. As discussed above, haptic effects such as vibrotactile haptic effects, electrostatic friction haptic effects, or deformation haptic effects can be produced using one or more haptic output devices 18. In other embodiments, actuation pad 320 can also function as a sensor (e.g., sensor 28) where a sensor detects a form of energy, or other physical property.

Activation controller 340 provides power or an electrical field to FET 310. Gate controller 330 provides a voltage or signal to the gate of FET 310 enabling current to flow from the source (labeled "S") of FET 310 through to the drain (labeled "D") to produce a voltage at resistor 315. Therefore, to activate actuation pad 320 both gate controller 330 and activation controller 340 must provide a voltage/signal to the gate and source of FET 310. In this state, a voltage/signal is present at actuation pad 320 and FET 310, *i.e.,* at resistor 315, thus activating actuation pad 320. The circuit shown in haptic active matrix system 300 is merely an example of a possible configuration, but as known to one of ordinary skill in the art there are endless possible equivalent designs using a FET, or other transistor or TFT, as discussed above.

In an embodiment, gate controller 330 and activation controller 340, respond to sensor 350. For example, when sensor 350 detects a force, it signals both gate controller 330 and activation controller 340 to activate FET 310 and thus actuation pad 320, which produces a haptic effect.

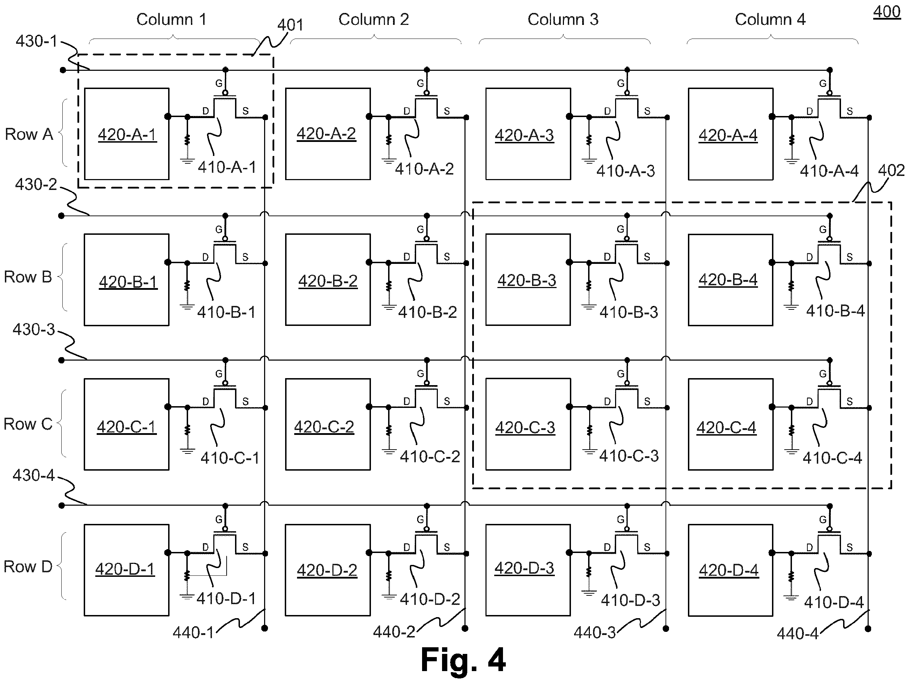

Fig. 4 is a diagram of a haptic active matrix system 400, according to an embodiment. Fig. 4 represents an array of actuation pads 420 and transistor switches 410 ("cells" or "actuation cells") as shown within area 401 with gate controller lines 430 and activation controller lines 440. Haptic active matrix system 400 also includes a gate controller (not shown) and an activation controller (not shown) that is similar in function to that described in Fig. 3. Further, while this array illustrates 16 actuation pads and switches, the array can be of any size and shape. Such an array can be referred to as a 4 x 4 (an M x N array where there are M rows and N columns, with M and N being integers with a value greater than 1) haptic active matrix system. In addition, Fig. 4 is a diagram that is not shown to scale. In practice the actuation pads can be significantly larger than the transistor switches and, in an embodiment, can have the switches placed behind the actuation pads. Further, as previously discussed, transistor switches 410 can take the form of a TFT.

As in Fig. 3, each actuation pad 420 includes one or more actuators that may be, for example, an electric motor, an electro-magnetic actuator, a voice coil, a shape memory alloy, an electro-active polymer, a solenoid, an eccentric rotating mass motor ("ERM"), a linear resonant actuator ("LRA"), a piezoelectric actuator, a high bandwidth actuator, an electroactive polymer ("EAP") actuator, a static or dynamic electrostatic friction ("ESF") device or display, or an ultrasonic vibration generator. In other embodiments, actuation pads 420 can also function as a sensor. The circuits shown in haptic active matrix system 400 are merely an example of a possible configuration, but as known to one of ordinary skill in the art there are endless possible equivalent designs using a FET, or other transistor or TFT, as previously discussed.

Each actuation pad 420 in haptic active matrix system 400 can individually be addressed by the use of gate controller lines 430 (also referred to as a trigger signal) and activation controller lines 440 (also referred to as an activation signal). For example, if haptic feedback is desired in the actuation cell located at row B, column 3, then activation line 440-3 and gate controller line 430-2 both need to be active. In this example, transistor switch 410-B-3 would open and activate actuation pad 420-B-3. In the same manner, any of the individual actuation cells can be addressed and activated. In activating a single actuation cell, only that selected cell will be activated, unlike the passive haptic system discussed in Fig. 2 that would activate the entire column and row.

Further, multiple actuation cells within haptic active matrix system 400 can be simultaneously activated utilizing multiple activation controller lines 440 and gate controller lines 430. For example, if it was desired to have the four activation cells shown in area 402 activated at the same time, then actuation cells 410-B-3, 420-B-4, 420-C-3 and 420-C-4 would be addressed by activating gate controller lines 430-2 and 430-3 along with activation lines 440-3 and 440-4. In this example, only the four addressed actuation cells are active - not the entire row and column.

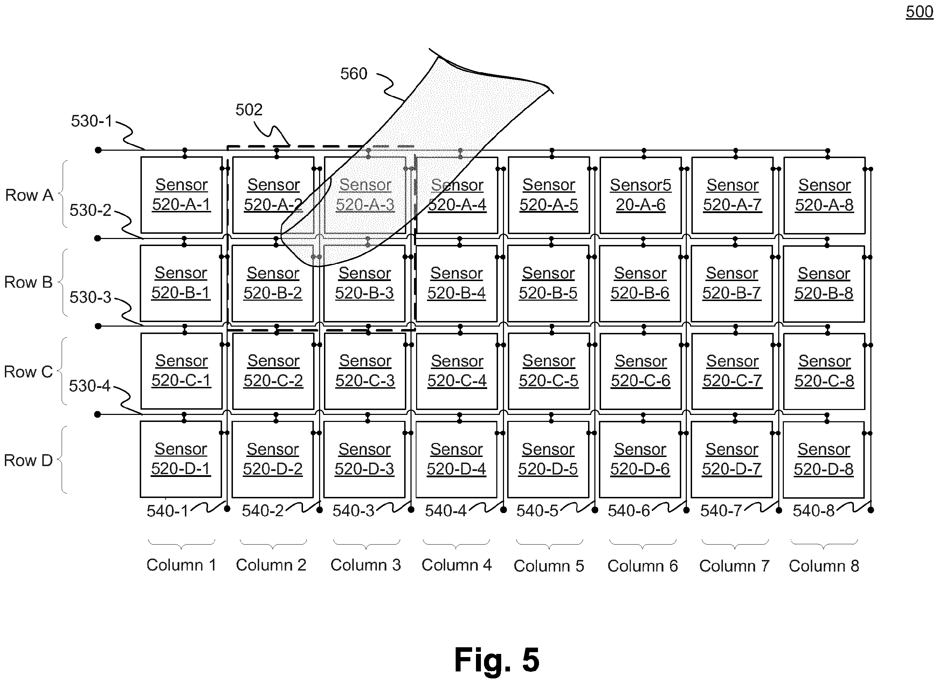

Fig. 5 is an illustration of a sensor matrix system 500, according to an embodiment. Sensor matrix system 500 would typically be used in conjunction with a haptic active matrix system, such as haptic active matrix system 400. Sensor matrix system 500 is used to detect and identify the location of an input, which is then conveyed to haptic active matrix system 400 to generate a haptic feedback in response to the user input.

Sensor matrix system 500 can be configured to mimic the layout of haptic active matrix system 400 such that there is a one-for-one relationship between the number and location of sensors and the corresponding actuation pad. However, in another embodiment the number of sensor can be greater than or less than the number of actuation pads. However, in either case there is a mapping of sensors to actuation pads such that the appropriate actuation pad is activated in response to a particular user input.

Sensor matrix system 500 is shown with row sensor output lines 530 that are used to identify the row location of an input signal. Column sensor output lines 540 are used to identify the column location of an input signal. For example, a user finger 560 is shown in proximity or touching the four sensors 520-A-2, 520-A-3, 520-B-2 and 520-B-3 at row A, columns 2 and 3, and at row B, columns 2 and 3. Sensors 520 can further be configured to convert the detected energy, or other physical property, into an electrical signal, or any signal that represents virtual sensor information. In an embodiment, the presence of the finger on the sensors 520-A-2, 520-A-3, 520-B-2 and 520-B-3 will produce a signal on sensor row lines 530-1 and 530-2 and on sensor column lines 540-2 and 540-3. The row and column signals are thus used to identify the position of the user input on the array.

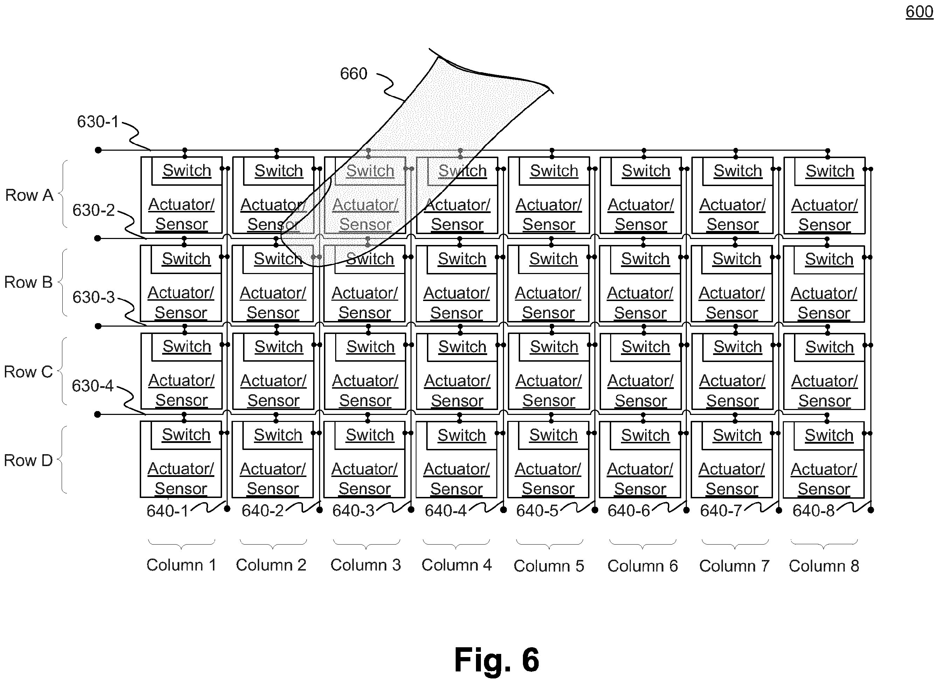

Fig. 6 is a diagram of a haptic active matrix and sensor system 600, according to an embodiment. System 600 is essentially a combination of the sensor matrix system 500 overlaid with the haptic active matrix system 400 in a one-to-one configuration where there is a single sensor associated with each actuator pad. System 600 is shown as a 4x8 matrix, but as discussed before, could be of any size or configuration.

In an embodiment, system 600 is mounted on, or into, a device such as a mobile device, touchscreen device, display device, smart phone, game controller, wearable or any other device that can be configured to generate haptic effects.

System 600 illustrates a finger 660 in proximity or touching the four sensors at columns 2 and 3, rows A and B. The sensor portion of system 600 detects the presence and location of finger 660. This information is forwarded to a processor (e.g., processor 12 in Fig. 1), that would generate and send a haptic control signals to a gate controller (not shown) and an activation controller (not shown) to activate the four actuators in rows A and B, columns 2 and 3, to generate a desired haptic effect.

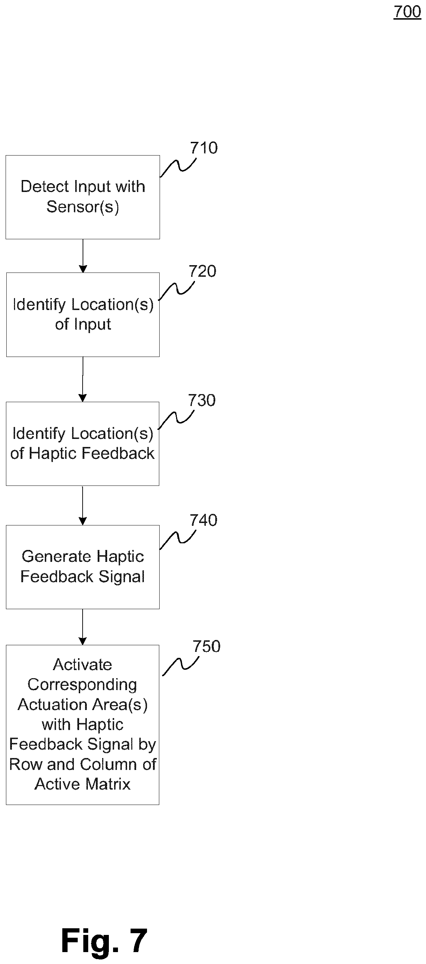

Fig. 7 is a flow diagram 700 with the functionality of system 10 of Fig. 1 utilizing an active matrix to generate and control localized haptic feedback, according to an embodiment. In one embodiment, the functionality of the flow diagram of Fig. 7 is implemented by software stored in memory or other computer readable or tangible medium, and executed by a processor. In other embodiments, the functionality may be performed by hardware (e.g., through the use of an application specific integrated circuit ("ASIC"), a programmable gate array ("PGA"), a field programmable gate array ("FPGA"), etc.), or any combination of hardware and software.

Flow diagram 700 starts at 710 where an input is detected. As discussed in Fig. 5 and Fig. 6, an input is detected by a sensor matrix. The sensors (*e.g*., sensor 28 in Fig. 1 and as shown in Fig. 5), can be configured to detect a form of energy, or other physical property, such as, but not limited to, acceleration, bio signals, distance, flow, force/pressure/strain/bend, humidity, linear position, orientation/inclination, radio frequency, rotary position, rotary velocity, manipulation of a switch, temperature, vibration, or visible light intensity. The sensors can further be configured to convert the detected energy, or other physical property, into an electrical signal, or any signal that represents virtual sensor information. In some embodiments, the sensor and the actuator can be the same component, for example, an EAP can be activated to produce a haptic effect. However, an EAP can also be deformed, such as by the touch of a user, to produce an output signal, and hence behave as a sensor.

At 720, the location, or locations, of the detected input are determined. Such determination can be accomplished through the use of row and column sensor lines as described in Fig. 5. In an embodiment, 710 and 720 can also be eliminated. For example, if a predefined haptic feedback sequence is known, including where the feedback is to be sent, and then there is no need to detect input and determine a location of that input.

At 730, the desired location of haptic feedback is determined. Such a location can be as discussed above as being predefined. In an embodiment, the location of haptic feedback is determined as discussed in Fig. 6 where sensors locate the location of user input, and based on that input location, determine which actuation areas are to be activated.

At 740, a desired haptic feedback signal is generated. The haptic feedback effects can include forces, vibrations, and motions that are detectable by a user. Devices, such as mobile devices, touchscreen devices, and personal computers, can be configured to generate haptic effects. In general, calls to embedded hardware capable of generating haptic effects (such as actuators) can be programmed within an operating system ("OS") of the device. These calls specify which haptic effect to play.

At 750, the corresponding actuation areas are activated. For example, as discussed in Figs. 4 and 6, a haptic active matrix array is used that includes the use of actuation pads and transistor switches where gate controller lines and activation controller lines address and select the desired haptic cells. A haptic signal can be sent to each switch to generate the desired haptic effect at each actuation pad. As discussed in Fig. 4, multiple actuation cells can be simultaneously activated to produce haptic effects throughout a larger area as desired.

As discussed, embodiments have been disclosed that include the detection of input, and the generation of haptic feedback at selected actuation cells in a haptic active matrix system. The haptic active matrix provides an energy efficient method and system to address and control the generation of haptic feedback in an active haptics array.

Several embodiments are specifically illustrated and/or described herein. However, it will be appreciated that modifications and variations of the disclosed embodiments are covered by the above teachings and within the purview of the appended claims without departing from the spirit and intended scope of the invention.

## Claims

1. A haptic effect generation system comprising:
a sensor configured to detect an input;
a haptic active matrix comprising M rows and N columns of actuation areas, where M and N are integers greater than one;
a gate controller coupled to each row of the haptic active matrix;
an activation controller coupled to each column of the haptic active matrix; and
a haptic generator configured to generate a haptic signal in response to a detected input;
wherein the gate controller and activation controller are configured to select one or more actuation areas; and
wherein the haptic signal is sent to at least one or more selected actuation areas to produce a haptic effect.

2. The haptic effect generation system of claim 1, further comprising a smart device.

3. The haptic effect generation system of claim 1, wherein each actuation area is coupled to the gate controller and the activation controller through a thin-film transistor that is configured to activate the coupled actuation area when selected.

4. The haptic effect generation system of claim 1, wherein each actuation area comprises a haptic actuator.

5. The haptic effect generation system of claim 1, wherein each actuation area comprises a sensor;
or
wherein each actuation area comprises a sensor and wherein each actuation area further comprises a haptic actuator;
or
wherein each actuation area comprises a sensor and wherein each actuation area further comprises a haptic actuator and wherein the sensor and the haptic actuator are one in the same.

6. The haptic effect generation system of claim 1, wherein each actuation area comprises a sensor and further comprising a controller configured to identify a location of the input.

7. The haptic effect generation system of claim 6, wherein the input comprises a touch input from a user;
or
wherein the input comprises a plurality of inputs.

8. The haptic effect generation system of claim 3, wherein the haptic signal is sent to a plurality of actuation areas, wherein only the actuation areas that receive the haptic signal are active.

9. The haptic effect generation system of claim 1, wherein the actuation areas comprise an electroactive polymer (EAP) or an electrostatic friction (ESF) component.

10. A method of producing haptic effects comprising:
detecting a user input on a device;
determining a location in a haptic active matrix, in response to the user input, where a haptic effect is to be produced, wherein the active matrix comprises M rows and N columns of actuation areas, where M and N are integers greater than one;
activating an actuation area within the active matrix at the determined location by producing a row trigger signal and a column activation signal; and
sending a haptic signal to generate a haptic effect at the activated actuation area.

11. The method of claim 10, wherein the activating an actuation area comprises applying the row trigger signal to a thin-film transistor coupled to the actuation area.

12. The method of claim 10, wherein the haptic signal is the row trigger signal.

13. The method of claim 10, wherein the detecting a user input includes utilizing a sensor;
or
wherein the detecting a user input includes a determining of a location of the user input.

14. The method of claim 11, wherein the producing a haptic effect comprises producing a plurality of haptic effects at a plurality of actuation areas, wherein only the actuation areas that receive the trigger signal are active.

15. A computer readable medium having instructions stored thereon that, when executed by a processor, cause the processor to produce haptic effects, the producing comprising:
detecting a user input on a device;
determining a location in a haptic active matrix, in response to the user input, where a haptic effect is to be produced, wherein the active matrix comprises M rows and N columns of actuation areas, where M and N are integers greater than one;
activating an actuation area within the active matrix at the determined location by producing a row trigger signal and a column activation signal; and
sending a haptic signal to generate a haptic effect at the activated actuation area.

16. The computer readable medium of claim 15, wherein the activating an actuation area comprises applying the row trigger signal to a thin-film transistor coupled to the actuation area, and wherein the producing a haptic effect comprises producing a plurality of haptic effects at a plurality of actuation areas, wherein only the actuation areas that receive the trigger signal are active.
